# EUROPÄISCHE PATENTSCHRIFT

(11) **EP 2 072 467 B1**
(45) Veröffentlichungstag und Bekanntmachung des Hinweises auf die Patenterteilung: **30.11.2011**
(21) Anmeldenummer: 08021961.1
(22) Anmeldetag: 18.12.2008
(51) Int. Cl.: C01G 13/00, C22B 7/00, C22B 43/00, B01F 13/06, B01F 15/06

(54) **Verfahren und Vorrichtung zur Herstellung von Quecksilbersulfid zur anschließenden Entsorgung**
Method and device for manufacturing mercury sulphide for subsequent disposal
Procédé et dispositif de fabrication de sulfure de mercure en vue du recyclage ultérieur

(30) Priorität: 19.12.2007 DE 102007061791; 25.01.2008 DE 102008006246
(43) Veröffentlichungstag der Anmeldung: 24.06.2009
(60) Teilanmeldung: 11000566.7
(73) Patentinhaber: DELA GmbH Recycling und Umwelttechnik, 32549 Bad Oeynhausen (DE)
(72) Erfinder: Bonmann, Christian, 45133 Essen (DE)
(74) Vertreter: Gesthuysen, von Rohr & Eggert

(56) Entgegenhaltungen:
- WO-A-2006/016076
- US-A- 5 034 054

## Beschreibung

Die Erfindung betrifft ein Verfahren zur Herstellung von Quecksilbersulfid zur anschließenden Entsorgung nach dem Oberbegriff des Anspruchs 1.

Quecksilber wird aufgrund seiner besonderen physikalischen Eigenschaften in vielen technologischen Anwendungen und in der industriellen Produktion eingesetzt. Hier ist insbesondere die Chloralkalieelektrolyse zur Gewinnung von Chlor zu nennen. Neben einer Vielzahl von positiven Eigenschaften ist Quecksilber aber auch ein giftiger Gefahrstoff, der insbesondere aufgrund seines bereits bei Raumtemperatur vergleichsweise hohen Dampfdrucks eine Gefahr für Mensch und Umwelt darstellt, Zahlreiche Unfälle und nahezu irreversible Umweltschäden in der Vergangenheit haben Quecksilber zu einer zweifelhaften Popularität verholfen.

Vor diesem Hintergrund werden heute in vielen Bereichen Quecksilber oder ganze Produktionsverfahren substituiert, um den Gebrauch von Quecksilber und damit Quecksilberemissionen so weit wie möglich zu reduzieren. Der verringerte Bedarf führt zu einer Reduzierung bis hin zur Einstellung der Produktion von Primärquecksilber an den bekannten Produktionsstätten. Schon seit vielen Jahren wird in Recycling-Anlagen Sekundär-Quecksilber aus Abfällen zurückgewonnen und als Alternative zum Prünär-Quecksilber am Markt angeboten. Sehr große Mengen Sekundär-Quecksilber werden zukünftig mit der weltweiten Umstellung bestehender Chlorproduktionen vom Amalgamverfahren zum Membranverfahren freigestellt. Dauerhaft wird es nicht möglich sein, das aus diesen Anlagen freigestellte Quecksilber in anderen umweltgerechten Anwendungen einzusetzen. Vor diesem Hintergrund wird es erforderlich, für elementares Quecksilber eine umweltgerechte, finale Entsorgungsmöglichkeit zur Verfügung zu stellen.

Eine Möglichkeit der Umwandlung von elementarem Quecksilber in eine stabilisierte Quecksilber-Verbindung besteht in der Herstellung von Quecksilbersulfid (Zinnober). Quecksilbersulfid ist eine stabile bzw, stabilisierte Verbindung, die aufgrund ihrer bekannten Eigenschaften (ungiftig, chemisch stabil, und zwar auch unter aggressiven Bedingungen) eine dauerhafte und gefahrlose Lagerung von Quecksilber zuläßt. Im Übrigen ist es grundsätzlich auch möglich, Quecksilbersulfid unter Einsatz von Schwefelverbindungen herzustellen.

Aus der WO 2006/016076 A1 geht bereits ein gattungsgemäßes Verfahren zur Herstellung von Quecksilbersulfid durch Reaktion von flüssigem Quecksilber mit festem Schwefel hervor, wobei das molare Verhältnis Hg/S von 1:1 bis 1:3 beträgt. Das Verfahren wird in einem rotierenden Reaktor durchgeführt, der aus einem Kolben, einem daran befestigten Rohr sowie einer Beschickungsmöglichkeit zur Zugabe des Quecksilbers und des Schwefels besteht. Die Reaktion findet bei Normaldurck und in einem Temperaturbereich zwischen 20°C und 100°C, vorzugsweise bei 60°C bis 80°C statt. Von Nachteil bei dem bekannten Verfahren ist, dass der Reaktor bei vergleichsweise hohen Drehgeschwindigkeiten über einen recht langen Zeitraum in dem vorgenannten Temperaturbereich gedreht werden muß.

Aus der US-A-5,034,054 ist bereits ein Verfahren zur Herstellung einer stabilisierten Quecksilberverbindung zur anschließenden Entsorgung bekannt. Dabei wird Quecksilber in Form eines Amalgams in Verbindung mit Kupfer, Zink oder Nickel als Zugabematerial oder aber als Quecksilbersulfid in Verbindung mit Schwefel als Zugabematerial gebunden und anschließend umweltgerecht entsorgt. Bei dem bekannten Verfahren wird das Zugabematerial mit dem Quecksilber in einem stöchiometrischen Verhältnis von wenigstens 1:1 und bevorzugt 3:1 zugegeben. Der Mischvorgang wird dabei bei Raumtemperatur und Umgebungsdruck durchgeführt. Von Nachteil bei dem bekannten Verfahren ist, dass das Zugabematerial in einem stark überstöchiometrischem Verhältnis zum Quecksilber zugegeben werden muß, um eine hinreichende Reaktion des Quecksilbers zu der Quecksilberverbindung zu gewährleisten. Ein weiterer Nachteil des bekannten Verfahrens besteht darin, dass im Hinblick auf den starken überstöchiometrischen Überschuß des Zugabematerials, das in Pulverform zugegeben wird, bei dem Mischprozeß Aerosole, das heißt kleinste in der Luft sedimentierende Zugabematerialpartikel entstehen können.

Aus der Veröffentlichung "Gmelins Handbuch der anorganischen Chemie; 1968, Verlag Chemie, Weinheim, Bd. 34, Seiten 554 ff." ist ein Verfahren zur Herstellung von schwarzem Quecksilbersulfid bekannt, bei dem zunächst Quecksilber und Schwefel in je einen Schenkel eines U-förmigen, hoch evakuierten Rohrs bei gewöhnlichen Temperaturen gelagert wird. Bei Verwendung eines engen Verbindungsrohrs zwischen den beiden Schenkeln tritt das Sulfid im Verbindungsrohr auf. Die reagierenden Mengen sind äußerst gering.

Aufgabe der vorliegenden Erfindung ist es, ein verbessertes Verfahren zur Herstellung von Quecksilbersulfid bereitzustellen.

Diese Aufgabe ist erfindungsgemäß im Wesentlichen dadurch gelöst, dass das Mischen in der Mischeinrichtung bei Unterdruck durchgeführt wird. Dabei bezeichnet Unterdruck jeden Druck unterhalb des Umgebungsdruckes bis hin zum Vakuum. Ausreichend sind bereits geringe Unterdrücke von 0,05 bar, was bei einem Umgebungsdruck von 1 bar absoluten Drücken von 0,95 bar entspricht. Die Durchführung des Mischvorgangs im Unterdruck bewirkt, wie zuvor beschrieben, dass der Siedepunkt des Quecksilbers entsprechend sinkt und schon bei geringeren Temperaturen eine hohe Konzentration von Quecksilber in gasförmiger Form im Mischergehäuse der Mischeinrichtung erreicht wird, wodurch sich das Quecksilber schneller mit dem Schwefel zur Bildung von Quecksilbersulfid reagiert.

Im Zusammenhang mit der Erfindung ist erkannt worden, dass die stark überstöchiometrische Zugabe des Zugabematerials entsprechend der US-A-5,034,054 deshalb erforderlich ist, da die Reaktion des Schwefels mit dem Quecksilber immer nur an der Oberfläche der im festen Zustand vorliegenden Schwefelpartikel erfolgen kann. Um eine vollständige Reaktion des Schwefels mit dem Quecksilber zu ermöglichen, ist bei dieser Fest-Flüssig-Reaktion ein hoher Überschuß des Schwefels notwendig. Die bei der vorliegenden Erfindung erhöhte Temperatur oberhalb der Schmelztemperatur des Zugabematerials während des Mischvorgangs führt als solche zunächst einmal dazu, dass der Dampfdruck des Quecksilbers weiter erhöht wird. Damit geht ein größerer Teil des Quecksilbers in die Dampfphase über, als dies bei Raumtemperatur der Fall ist. Insgesamt wird die Reaktivität des Quecksilbers dadurch erhöht und die Bildung von Quecksilbersulfid verbessert.

Von besonderem Vorteil im Hinblick auf eine vollständige Umsetzung der Einsatzstoffe zu Quecksilber ist es, wenn das Mischen oberhalb des Schmelzpunktes des Zugabematerials, vorzugsweise bei einer Temperatur über 150°C und insbesondere im Bereich des Siedepunktes von Quecksilber erfolgt. Die Erhöhung der Temperatur auf die vorgenannten Werte bewirkt folgendes. Zunächst einmal ändert sich der Aggregatzustand des Zugabematerials von fest in flüssig. Weiterhin führt die Temperaturerhöhung zu einer weiteren Erhöhung des Dampfdrucks von Quecksilber. Gleichzeitig entsteht je nach Höhe der Temperatur auch ein Schwefeldampf. Damit finden in der Mischeinrichtung unterschiedliche Mischvorgänge statt, nämlich bezogen auf Quecksilber/Schwefel die Mischvorgänge flüssig/fest, flüssig/flüssig, flüssig/gasförmig, gasförmig/fest, gasförmig/flüssig und gasförmig/gasförmig. Auf diese Weise wird eine optimierte Umsetzung der Einsatzstoffe zu Quecksilbersulfid erreicht.

Besonders bevorzugt ist es, den Mischvorgang in einem Temperaturbereich innerhalb der Mischeinrichtung etwa im Bereich des Siedepunktes bei Quecksilber bei gleichzeitigem Unterdruck durchzuführen. Damit kann erreicht werden, dass das gesamte noch elementar vorhandene Quecksilber während des Mischvorgangs in die Gasphase überführt wird und damit eine optimale Vermischung mit dem Schwefel erfolgen kann. Im Übrigen ist es auch unter Sicherheitsaspekten sinnvoll, das erfindungsgemäße Verfahren bei einem verringerten Druck in einem geschlossenen Mischer durchzuführen, da so selbst bei Erreichen des Siedepunktes von Quecksilber entsprechend dem eingestellten Unterdruck keine Quecksilberdämpfe entweichen können bzw, bei geringeren Temperaturen gearbeitet werden kann. Im Übrigen hat die Durchführung des Mischvorgangs im Unterdruck etwa bei Siedetemperatur des Quecksilbers den Vorteil, dass bei einer gegebenenfalls auftretenden, unerwünschten Druckerhöhung in der Mischeinrichtung lediglich der Normaldruck eingestellt werden muß, was gleichzeitig dazu führt, dass der Siedepunkt des Quecksilbers ansteigt, was bei dem vorhandenen Temperaturniveau zu einer umgehenden Druckminderung führt.

Insbesondere bei Durchführung des erfindungsgemäßen Verfahrens im zuvor genannten Temperaturbereich und/oder im Unterdruck ist es möglich, die Einsatzstoffe in dem stöchiometrischen oder einem gering überstöchiometrischen Verhältnis zuzugeben. Das stöchiometrische Verhältnis von elementarem Schwefel zu Quecksilber liegt bei 0,16:1. Bei einem solchen Verhältnis liegt eine ideale Umsetzung der Einsatzstoffe zu Quecksilbersulfid vor. Bei nicht vollständiger Umsetzung liegt der obere Grenzwert bei 0,5:1 und damit noch immer 100% unterhalb der unteren Grenze des Mischungsverhältnisses, das in der US-A-5,034,054 genannt ist. Bevorzugt liegt das Verhältnis zwischen elementarem Schwefel und Quecksilber zwischen 0,18:1 bis 0,32:1 und insbesondere zwischen 0,19:1 und 0,23 :1,

Bei einer bevorzugten Ausführungsförm der vorliegenden Erfindung wird die Mischeinrichtung zur Erzielung einer sauerstofffreien Atmosphäre mit Inertgas gespült, vorzugsweise mehrfach. Durch die dabei erzielte sauerstofffreie Atmosphäre kann während des Mischvorgangs die Bildung von SO₂ ausgeschlossen werden.

Im Übrigen ist es zur Vermeidung von etwaig beim Mischen auftretenden Dämpfen oder Aerosolen günstig, wenn der Mischvorgang in einem geschlossenen, gasdichten Raum der Mischeinrichtung durchgeführt wird. Durch diese geschlossene Applikation ergibt sich letztlich eine Emissionsfreiheit in Verbindung mit dem erfindungsgemäßen Verfahren.

Die Mischung der Einsatzstoffe in der Mischeinrichtung erfolgt bevorzugt dadurch, dass entweder das Mischergehäuse während des Mischvorgangs rotiert, oder aber das Mischergehäuse fest installiert ist und eine abgedichtete Mischerwelle mit einer Mehrzahl von Mischerschaufeln vorgesehen sind, die innerhalb des Mischergehäuses rotieren. Dabei ist die Erfindung nicht auf eine bestimmte Drehzahl festgelegt. Grundsätzlich gilt, je besser die Durchmischung ist, desto intensiver, das heißt schneller, wird die Reaktion zwischen Quecksilber und dem Schwefel erfolgen.

Bei Versuchen, die durchgeführt worden sind, ist festgestellt worden, dass der Mischvorgang über eine Behandlungszeit zwischen 10 Minuten und drei Stunden, insbesondere zwischen 20 Minuten und zwei Stunden und insbesondere zwischen 30 Minuten und einer Stunde durchgeführt wird, um eine vollständige Umsetzung der vorhandenen Einsatzstoffe zu Quecksilbersulfid zu gewährleisten.

Statt eines diskontinuierlichen Verfahrens ist es grundsätzlich auch möglich, ein kontinuierliches Verfahren zur Immobilisierung von Quecksilber durch Reaktion mit Schwefel zu Quecksilbersulfid vorzunehmen, wobei ein Reaktor kontinuierlich mit dem Quecksilber und dem Zugabematerial beschickt wird, wobei das Quecksilber und das Zugabematerial im Reaktor erwärmt und in einen gasförmigen Zustand überführt werden und wobei die Reaktion zwischen dem Quecksilber und dem Zugabematerial in der Gasphase erfolgt.

Vorrichtungsgemäß ist ein vorzugsweise indirekt beheizbarer Reaktor für die Überführung von elementarem Quecksilber und einem elementaren Schwefel und/oder eine Quecksilberverbindung enthaltenden Zugabematerial in den gasförmigen Zustand vorgesehen, wobei der Reaktor über eine entsprechend ausgebildete Beschickungseinrichtung kontinuierlich mit dem Quecksilber und dem Zugabematerial beschickt werden kann. Bei dem Reaktor kann es sich um einen vorzugsweise aufrecht stehenden Rohrreaktor handeln, der hohe Umsatzraten der gasförmigen Komponenten gewährleistet. Im Übrigen führt die indirekte Beheizung des Reaktors zu einer Verfahrenseinfachung.

Im Zusammenhang mit der kontinuierlichen Herstellung von Quecksilbersulfid ist weiter vorgesehen, dass das bei der Reaktion im Reaktor erhältliche Quecksilbersulfid kontinuierlich dampfförmig aus dem Reaktor abgeführt wird. Die Betriebstemperatur in dem Reaktor liegt dabei vorzugsweise oberhalb von der Siedetemperatur von Quecksilbersulfid bzw. oberhalb der Verdampfungstemperatur, damit das gebildete Quecksilbersulfid nicht innerhalb von dem Reaktor kondensiert bzw. resublimiert. Die Betriebstemperatur im Reaktor sollte daher vorzugsweise oberhalb von ca. 580° liegen, kann jedoch auch höher gewählt sein, um eine Kondensation bzw. Resublimation von Quecksilbersulfid sicher ausschließen zu können. Sofern der Reaktor bei Unterdruck betrieben wird, kann die Betriebstemperatur auch entsprechend verringert werden.

Der Betrieb des Reaktors bei Temperaturen im Bereich oberhalb von der Siedetemperatur von Quecksilbersulfid führt im Übrigen dazu, dass die Einsatzstoffe nach dem Eintrag in den Reaktor sehr schnell in die gasförmige Phase überführt werden. Dadurch läßt sich die nötige Verweilzeit im Reaktor entsprechend verringern und die Produktionsmenge von Quecksilbersulfid entsprechend steigern.

Der Reaktor kann mit einem vorzugsweise homogenisierten Gemisch aus flüssigem Quecksilber und pulverförmigen Zugabematerial beschickt werden. Dies ermöglicht eine verfahrenstechnisch einfache kontinuierliche Beschickung des Reaktors mit den Ausgangsstoffen. Es versteht, dass eine Beschickungseinrichtung vorgesehen sein muß, die für die kontinuierliche Beschickung des Reaktors mit dem homogenisierten Gemisch ausgebildet ist. Grundsätzlich kann auch eine Dosieranlage vorgesehen sein, wobei Quecksilber und Zugabematerial dem Reaktor aus Vorlagebehältern im gewünschten Mischungsverhältnis getrennt zugeführt werden.

Die Auslegung des Reaktors und die Stoffmengeströme sollten so gewählt sein, dass die rechnerische Verweilzeit von Quecksilber und Zugabematerial im Reaktor wenigstens eine Sekunde bis 6 Sekunden, vorzugsweise weniger als vier Sekunden, beträgt. Dadurch ist ein ausreichender Umsatz bei der Gasphasenreaktion zwischen dem Quecksilber und dem Zugabematerial sichergestellt.

Vorzugsweise wird der Reaktor und auch die weiteren an der Herstellung von Quecksilbersulfid beteiligten Einrichtungen bei der erfindungsgemäßen Vorrichtung gasdicht betrieben, damit es bei der kontinuierlichen Herstellung von Quecksilbersulfid nicht zu einem Entweichen von Quecksilbersulfid in die Umgebung kommen kann. Dadurch ist eine umweltgerechte Erzeugung von Quecksilbersulfid aus den Einsatzstoffen möglich.

Der Reaktor kann über eine Vakuumpumpe oder ein Vakuumgebläse mit einem geringen Unterdruck beaufschlagt werden, um der Betriebssicherheit zu genügen und das Austreten von Quecksilbersulfid aus dem Reaktor ausschließen zu können. Es versteht sich, dass der Betrieb unter geringem Unterdruck alle Einrichtungen der erfindungsgemäßen Vorrichtung betrifft, die von gasförmigem Quecksilbersulfid durchströmt werden.

Weiter ist bei dem erfindungsgemäßen Verfahren vorgesehen, dass das dampfförmige Quecksilbersulfid nach dem Abführen aus dem Reaktor mit einem flüssigen oder dampfförmigen Kühlmedium schlagartig zumindest bis zum Erreichen eines festen Zustands, vorzugsweise bis auf eine Temperatur von weniger als 50°C, abgekühlt und zusammen mit dem Kühlmedium einer Fest-Flüssig-Trennung unterzogen wird. Bei dem Kühlmedium kann es sich um Wasser handeln, wobei zur Abkühlung des Quecksilbersulfids ein Quench und/oder eine Wasserstrahlpumpe vorgesehen sein können. Damit es nicht zu einer ungewollten Kondensation bzw. Resublimation von Quecksilbersulfid vor der schlagartigen Abkühlung kommt, kann eine beheizbare Leitung für das Quecksilbersulfid zwischen dem Reaktor und dem Quench und/oder der Wasserstrahlpumpe vorgesehen sein. Mit Betrieb des Quenchs oder der Wasserstrahlpumpe stellt sich im Regelbetrieb ein ausreichendes Druckgefälle zum Reaktor ein, so dass die Möglichkeit besteht, die Anlage ohne Vakuumpumpe oder Vakuumgebläse bei geringem Unterdruck zu betreiben, ohne dass ein Entweichen von Quecksilbersulfid in die Umgebung befürchtet werden muß.

Der Quench oder die Wasserstrahlpumpe können mit gekühltem Wasser gespeist werden, was zu einer schlagartigen Abkühlung des dampfförmigen Quecksilbersulfids führt, das nachfolgend zusammen mit dem Wasser einer Fest-Flüssig-Trennstufe zugeführt wird, um das abgekühlte Quecksilbersulfid von dem Kühlmedium abzutrennen. Das Kühlmedium kann im Kreislauf geführt sein, was zu einer Einsparung von Betriebskosten führt.

Die Fest-Flüssig-Trennung von festem Quecksilbersulfid und flüssigem Kühlmedium kann durch Schwerkraftabscheidung in einem Sedimentationsbecken und/oder durch Fliehkraftabscheidung in einer Zentrifuge erfolgen. Die hohe Dichte von Quecksilbersulfid von 8,1 g/cm³ ermöglicht dabei eine einfache und kostengünstige Abtrennung von Quecksilbersulfid aus dem Kühl- bzw. Waschwasser. Das so erhaltene feste Quecksilbersulfid kann im Anschluß an die Fest-Flüssig-Trennung gepreßt und ggf, getrocknet werden. In diesem Zusammenhang kann eine Preßeinrichtung, vorzugsweise eine Filterpresse, vorgesehen sein, wobei der so erhältliche Filterkuchen aus Quecksilbersulfid im Anschluß in einem Vakuummischer und/oder einem Trockenofen getrocknet werden kann.

Bevorzugt ist es im Übrigen, wenn das nach dem erfindungsgemäßen Verfahren hergestellte Quecksilbersulfid nach dem Mischen über eine mit der Mischeinrichtung gekoppelte, geschlossene Abführeinrichtung abgeführt wird. Durch die Realisierung einer geschlossenen Abführeinrichtung kann das hergestellte Quecksilbersulfid ohne Staubemission abtransportiert und anschließend staubdicht in entsprechende Behälter für die finale Lagerung abgefüllt werden.

Bei Versuchen, die durchgeführt worden sind, ist festgestellt worden, dass der Mischvorgang - abhängig von den Prozeßbedingungen, nämlich insbesondere der Temperatur und des angelegten Unterdrucks - über eine Behandlungszeit zwischen 10 Minuten und drei Stunden, insbesondere zwischen 20 Minuten und zwei Stunden und insbesondere zwischen 30 Minuten und einer Stunde durchgeführt werden sollte, um eine vollständige Umsetzung der Einsatzstoffe zu Quecksilbersulfid zu erreichen. Dabei kann - je nach Größe der Mischeinrichtung pro Mischvorgang eine Charge zwischen 10 und 10.000 Liter an Einsatzstoffen zugeführt werden.

Im Übrigen kann es sich anbieten, der Mischeinrichtung vor oder während des Mischvorgangs wenigstens einen Zuschlagstoff zur Konditionierung des hergestellten Quecksilbersulfids zuzuführen. Insbesondere kann ein Zuschlagstoff zum Einsatz kommen, durch den das Quecksilbersulfid eine körnige Form erhält.

Bevorzugt ist es weiterhin, wenn das Quecksilbersulfid nach dem Mischen über eine mit der Mischeinrichtung gekoppelte, geschlossene Abführeinrichtung abgeführt wird. Durch eine derartige geschlossene Abführeinrichtung kann sichergestellt werden, dass auch bei der Entnahme des Quecksilbersulfids keine Emissionen auftreten, so dass der gesamte Prozeß letztlich zumindest im Wesentlichen emissionsfrei durchgeführt werden kann.

Vorrichtungsgemäß ist in Verbindung mit dem zuvor beschriebenen Verfahren eine ein Mischergehäuse aufweisende Mischeinrichtung zum Mischen des elementaren Quecksilbers mit dem Zugabematerial vorgesehen. Dabei ist bei einer erfindungsgemäßen Alternative vorgesehen, dass dem Mischergehäuse eine Heizeinrichtung zugeordnet ist, um die im Mischergehäuse befindlichen Einsatzstoffe zumindest auf eine Temperatur oberhalb des Schmelzpunktes des Zugabematerials zu erhitzen.

Bei der alternativen Ausführungsform, die sich jedoch insbesondere in Verbindung mit der vorgenannten Ausführungsform eignet, ist die Mischeinrichtung als Vakuummischer mit einem druckdichten Mischergehäuse ausgebildet, wobei dem Mischergehäuse eine Vakuumpumpeinrichtung zugeordnet ist.

Im Übrigen ist dem Mischergehäuse vorteilhafterweise eine Intertgaszuführung zur Inertisierung des Mischraums zugeordnet.

Weiterhin weist die Mischeinrichtung bevorzugt einen Drehantrieb entweder für das Mischergehäuse, wenn dieses gedreht wird, oder aber für eine Mischerwelle mit daran befestigten Mischerschaufeln auf, um eine intensive Durchmischung des Quecksilbers und des Schwefels zu gewährleisten. In einer versuchsweise betriebenen Anlage mit Mischerwelle und daran befestigten Mischerschaufeln wurden im Übrigenverschiedene Drehzahlen sowie verschiedene Wandabstände der Mischerschaufeln erprobt. Dabei ist festgestellt worden, dass mit steigender Drehzahl und verringertem Wandabstand der Mischerschaufeln eine Optimierung der Reaktionszeit zu beobachten ist.

Im Übrigen ist dem Mischergehäuse eine geschlossene Abführeinrichtung für das Quecksilbersulfid zugeordnet. Über diese Abführeinrichtung kann das Quecksilbersulfid staubfrei aus dem Mischer abgeführt werden.

Des Weiteren weist die erfindungsgemäße Vorrichtung eine der Mischeinrichtung in Verfahrensrichtung vorgeschaltete Beschickungseinrichtung auf, über die die Einsatzmaterialien zugeführt werden können. Dabei versteht es sich, dass die Beschickungseinrichtung insgesamt ein geschlossenes System darstellt, so dass etwaige Emissionen hier nicht auftreten können.

Es wird ausdrücklich darauf hingewiesen, dass alle vorstehend genannten und in den Patentansprüchen angegebenen Bereichsangaben sämtliche, innerhalb des betreffenden Bereichs liegende Zwischenintervalle und Einzelwerte einschließlich etwaiger Dezimalstellen umfassen, auch wenn diese Zwischenintervalle und Einzelwerte im einzelnen nicht angegeben sind.

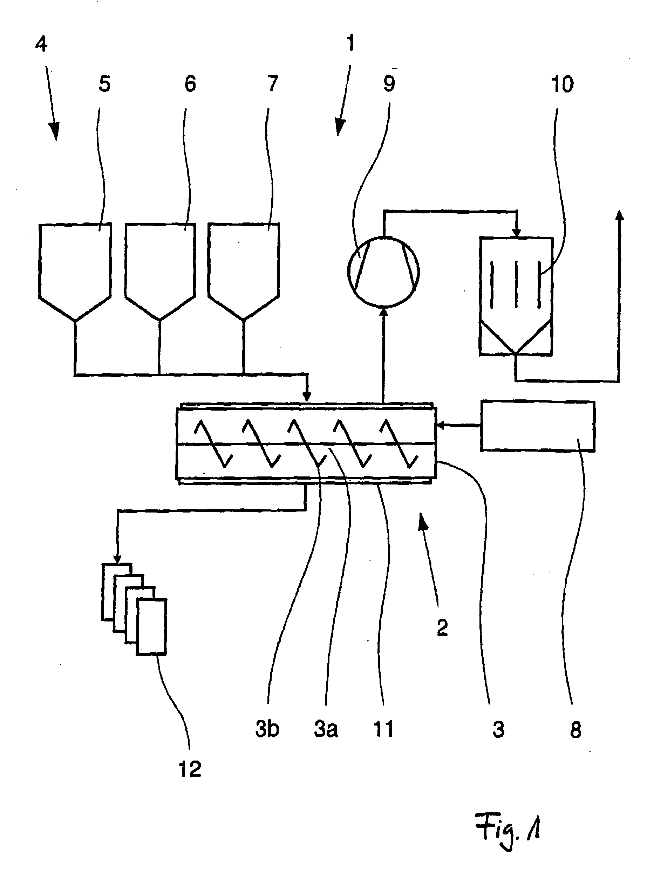

Fig. 1 zeigt eine schematische Darstellung einer Vorrichtung zur Herstellung von Quecksilbersulfid zur anschließenden Entsorgung. Anhand der Zeichnung wird nachfolgend auch das erfindungsgemäße Verfahren beschrieben. Allerdings wird darauf hingewiesen, dass die Erfindung nicht auf die dargestellte Ausführungsform beschränkt ist.

Dargestellt ist eine Vorrichtung 1 zur Herstellung von Quecksilbersulfid (HgS) aus elementarem Quecksilber (Hg) und elementarem Schwefel (S) zur finalen umweltgerechten Entsorgung. Die Vorrichtung 1 weist eine Mischeinrichtung 2 mit einem Mischergehäuse 3 auf. Bei der Mischvorrichtung 1 handelt es sich vorliegend um einen Vakuummischer in Horizontalbauweise, wobei darauf hinzuweisen ist, dass andere Bauformen und Anordnungen auch möglich und nicht weniger effizient sind.

Der Mischeinrichtung 2 vorgeschaltet ist eine Beschickungseinrichtung 4. Im dargestellten Ausführungsbeispiel weist die Beschickungseinrichtung 4 drei Vorlagebehälter 5, 6, 7 auf. Dabei befindet sich im Vorlagebehälter 5 flüssiges elementares Quecksilber, während sich im Vorlagebehälter 6 pulverförmiger elementarer Schwefel befindet. Im Vorlagebehälter 7, der fakultativ vorgesehen ist, befinden sich Zuschlagstoffe zur Konditionierung, die bedarfsweise zusammen mit dem Quecksilber und dem Schwefel, bedarfsweise aber auch erst während oder nach dem eigentlichen Mischvorgang dem Mischergehäuse 3 zugeführt werden können.

Statt der dargestellten Vorlagebehälter 5, 6, 7 kann die Zuführung der Einsatzstoffe wahlweise auch aus beweglichen Behältern erfolgen, die dann je nach Beschickung oberhalb der Mischeinrichtung 2 aufgesetzt und entleert werden.

Aus der Beschickungseinrichtung 4 bzw. dem jeweiligen Vorlagebehälter 5, 6 und gegebenenfalls 7 werden mittels an sich bekannter automatischer Dosiertechnik die Einsatzstoffe im gewünschten Verhältnis in das Mischergehäuse 3 gefördert. Hierzu dient eine im Einzelnen nicht dargestellte Fördereinrichtung der Beschickungseinrichtung 4, die nach außen hin abgeschlossen ist, so dass weder ein Austritt von Quecksilber noch von Schwefelpartikeln oder aber Partikeln des gegebenenfalls zugeführten Zuschlagstoffs nach außen austreten können.

Die Beschickung der Mischeinrichtung 2 erfolgt dabei in einem leicht überstöchiometrischen Verhältnis des pulverförmigen elementaren Schwefels zum flüssigen Quecksilber mit S:Hg = (32 + 10) : 200 = 0,21:1. Bei dem Verhältnis S:Hg = 32 : 200 =0,16:1 handelt es sich um das stöchiometrische Verhältnis. Es wird darauf hingewiesen, dass das Verfahren grundsätzlich aber auch in jedem anderen überstöchiometrischen Verhältnis mit Schwefelüberschuß durchgeführt werden kann. Allerdings bietet die zuvor genannte, leicht überstöchiometrische Dosierung eine effiziente und vollständige Bindung des Quecksilbers. Die Dosierung als solche erfolgt durch eine getrennte Verwiegung der Einsatzstoffe Quecksilber und Schwefel sowie des gegebenenfalls zugeführten Zuschlagstoffs aus dem Vorlagebehälter 7. Die entsprechenden Wiegeeinrichtungen im Anschluß an die einzelnen Vorlagebehälter sind nicht dargestellt.

Nach der Befüllung des Mischergehäuses 3 mit den Einsatzstoffen in der vorbestimmten Dosierung wird das Mischergehäuse 3 gasdicht verschlossen und über eine Intertgaszuführung 8 mit Inertgas, beispielsweise Stickstoff, geflutet. Gleichzeitig erfolgt über eine Vakuumpumpeinrichtung 9 eine Absaugung des Innenraums. Das abgesaugte Gas wird anschließend einer Filtereinrichtung 10 zugeführt, bei der sich vorliegend um einen Aktivkohlefilter handelt. Anschließend wird die abgereinigte Abluft aus der Filtereinrichtung 10 abgeführt. Die Inertisierung des Mischraums innerhalb des Mischergehäuses 3 stellt vorliegend eine Sicherheitsroutine dar, um unerwünschte Reaktionen der Einsatzstoffe mit Sauerstoff auszuschließen. Die Inertisierung ist jedoch nicht zwingend erforderlich, grundsätzlich kann auf die Intertisierung auch verzichtet werden.

Gleichzeitig mit oder nach der Inertisierung wird über die Vakuumpumpeinrichtung 9 ein Unterdruck im Mischraum des Mischergehäuses 3 erzeugt. Vorliegend wird ein Unterdruck von 0,1 bar bei einem Absolutdruck von 0,9 bar im Mischergehäuse 3 über die Vakuumpumpeinrichtung 9 eingestellt. Sodann wird der Mischerantrieb und damit der Mischvorgang gestartet. Dabei beginnt die Mischerwelle 3a mit den daran befestigten Mischerschaufeln 3b sich mit geringer Drehzahl zu drehen. Hierdurch erfolgt nach kurzer Zeit ein Mischen und eine Feinverteilung des flüssigen Quecksilbers mit dem Schwefelpulver. Aufgrund des angelegten Unterdrucks und der daraus resultierenden Dampfdruckerhöhung des Quecksilbers setzt eine spontane Reaktion des Quecksilbers mit dem Schwefel ein.

Parallel zum gestarteten Mischvorgang wird das Mischergehäuse über Raumtemperatur erwärmt. Hierzu dient eine dem Mischergehäuse 3 zugeordnete Heizeinrichtung 1. Die Heizeinrichtung 1 wirkt unmittelbar auf die äußere Wandung des Mischergehäuses 3. Durch die äußere Beheizung des Mischergehäuses 3 ergibt sich eine indirekte Beheizung des Mischraums durch die Wandungen des Mischergehäuses 3 hindurch und eine Wärmeübertragung auf die im Mischergehäuse 3 befindlichen Einsatzstoffe. Die Beheizung des Mischergehäuses 3 erfolgt solange, bis im Mischraum die Siedetemperatur des Quecksilbers erreicht ist. Da das Verfahren im Unterdruck durchgeführt wird, ist die Siedetemperatur des Quecksilbers gegenüber der Siedetemperatur bei Raumbedingungen verringert. Bei einer bevorzugten Ausführungsform mit geringem Unterdruck wurde die Siedetemperatur im Mischraum bei 320°C erreicht. Die Steuerung der Beheizung erfolgt in Abhängigkeit von entsprechenden Sensoren, die mit der Heizeinrichtung 1 gekoppelt sind.

Je nach eingestelltem Vakuum bzw. Absolutdruck im Mischergehäuse 3 sowie aufgrund der ansteigenden Temperatur geht nun ein Teil des Quecksilbers und des Schwefels, der einen Schmelzpunkt zwischen 112°C bis 119°C aufweist, in die Gasphase über. Aufgrund der hohen Affinität von Quecksilber und Schwefel reagiert die entstehende Gasphase sofort quantitativ zu Quecksilbersulfid. Aufgrund des vergleichsweise hohen Dampfdruckes von Quecksilber werden schnell Quecksilberdämpfe gebildet, was zunächst zu einer besseren Verteilung des Quecksilbers und Reaktion an den Oberflächen der Schwefelpartikel führt. Mit Überschreiten des Schmelzpunktes von Schwefel und weiterer Erwärmung werden dann zunehmend auch Schwefeldämpfe gebildet, die unter diesen optimalen Bedingungen sofort mit den Quecksilberdämpfen zu Quecksilbersulfid reagieren. Die Kombination der Flüssig-Feststoffreaktion mit der parallel verlaufenden Gasphasenreaktion führt nun innerhalb des Mischergehäuses 103 zu einer sehr schnellen und vollständigen Umsetzung des vorhandenen Quecksilbers zu Quecksilbersulfid. Der an sich bestehende Nachteil der schlechten Mischbarkeit von flüssigem Quecksilber mit seiner hohen Dichte und Oberflächenspannung mit Schwefelpulver wird bei dem vorliegenden Verfahren durch die zumindest teilweise Überführung des Quecksilbers in die Gasphase und die teilweise Überführung des Schwefels in die flüssige und die Gasphase kompensiert.

In bisher durchgeführten Versuchen konnte die vollständige Umsetzung des in einer Charge, das heißt bei einem Mischvorgang im Mischergehäuse 3, enthaltenen Quecksilbers durch anschließende Messungen der Quecksilberkonzentration in der Atmosphäre über dem Quecksilbersulfid nachgewiesen werden. Dazu wurden Proben des produzierten Quecksilbersulfids in gasdicht verschließbare Glaskolben gefüllt und anschließend die sich darin einstellende Atmosphäre per Atomabsorptionsspektrometrie (AAS) überprüft. Es konnte unter Anwendung dieser Methode kein freies, das heißt elementares Quecksilber mehr nachgewiesen werden.

Nach vollständiger Reaktion wird das Quecksilbersulfid über eine nicht dargestellte Entleerklappe des Mischergehäuses 3 entnommen. Die Entleerung erfolgt über eine nicht dargestellte geschlossene Abführeinrichtung, bei der es sich um eine vorzugsweise gekühlte Förderschnecke handeln kann. Diese ermöglicht es nicht nur, dass Quecksilbersulfid abzukühlen, sondern dieses auch ohne Staubemission aus dem Mischer direkt in staubdicht angeschlossene, für die finale Lagerung geeignete Behälter 12 abzufüllen.

Wie zuvor bereits ausgeführt worden ist, ist es durch den im Vorlagebehälter 7 befindlichen Zuschlagstoff sowie durch weitere, gegebenenfalls in weiteren Vorlagebehältern befindliche Zuschlagstoffe möglich, das hergestellte Quecksilbersulfid innerhalb des Mischergehäuses zu konditionieren. So ist es durch entsprechende Zuschlagstoffe ohne weiteres möglich, das Quecksilbersulfid in körniger, nicht staubender Konsistenz herzustellen, um damit auch das offene Handling des hergestellten Quecksilbersulfids zu ermöglichten.

Für die Herstellung von Quecksilbersulfid nach dem zuvor beschriebenen Verfahren wurden in einer Versuchsanlage Behandlungszeiten bei einer vollständigen Umsetzung des Quecksilbers zwischen 30 Minuten und einer Stunde ermittelt. Der erreichbare Durchsatz der Vorrichtung 1 hängt im Ergebnis von der Größe der verwendeten Mischeinrichtung 2 ab. Bei einer Verwendung von Mischeinrichtungen mit 100 bis 10.000 Liter Fassungsvermögen lassen sich täglich mehrere Tonnen Quecksilbersulfid produzieren.

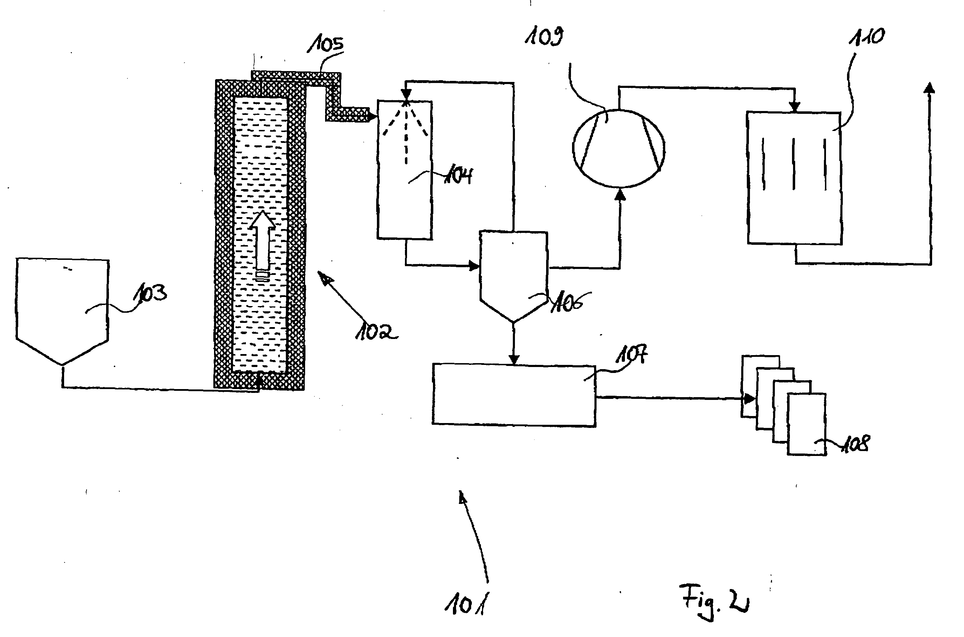

Fig. 2 zeigt eine schematische Darstellung einer Vorrichtung zur kontinuierlichen Herstellung von Quecksilbersulfid zur anschließenden Entsorgung.

In Fig. 2 ist eine Vorrichtung 101 zur Herstellung von Quecksilbersulfid (HgS) aus elementarem Quecksilber (Hg) und elementarem Schwefel (S) zur finalen umweltgerechten Entsorgung dargestellt. Bei dem Quecksilber handelt es sich vorzugsweise um Sekundär-Quecksilber. Die Vorrichtung 101 weist einen Reaktor 102 auf, der als aufrecht stehender Rohrreaktor ausgebildet und indirekt beheizbar ist und der zur Überführung von elementarem Quecksilber und einem elementaren Schwefel und/oder eine Schwefelverbindung enthaltenden Zugabematerial in den gasförmigen Zustand ausgebildet ist. Nicht im einzelnen dargestellt ist, dass der Reaktor 102 eine Beschickungseinrichtung aufweist, die eine kontinuierliche Beschickung des Reaktors 102 mit dem Quecksilber und dem Zugabematerial aus einem Vorlagebehälter 103 ermöglicht. Der Vorlagebehälter 103 enthält ein vorher vermischtes und weitgehend homogenisiertes Gemisch von Schwefel und Quecksilber.

In dem Reaktor 102 wird bei einer Betriebstemperatur, die oberhalb von der Siede- bzw. Verdampfungstemperatur von Quecksilbersulfid liegt, das kontinuierlich dem Reaktor 102 zugeführte Ausgangsgemisch aus Quecksilber und elementarem Schwefel in den gasförmigen Zustand überführt. Daran schließt sich eine kontinuierlich ablaufende Gasphasenreaktion zwischen den im gasförmigen Zustand vorliegenden Einsatzstoffen an, wobei das so erhältliche dampfförmige Quecksilbersulfid bei einer rechnerischen Verweilzeit der Einsatzstoffe im Reaktor 102 von mehr als einer Sekunde bis vorzugsweise weniger als vier Sekunden kontinuierlich aus dem Reaktor 102 abgeführt und einem Quench 104 zugeführt wird. Eine exemplarisch dargestellte Leitung 105 zwischen dem Reaktor 102 und dem Quench 104 ist beheizbar, um das Kondensieren bzw. Resublimieren von Quecksilbersulfid in der Leitung 105 zu verhindern.

Bei der Gasphasenreaktion im Reaktor 102 wird rotes kristallines Quecksilbersulfid erhalten. Rotes Quecksilbersulfid ist in Wasser, Säuren (Ausnahme Königswasser) und Laugen unlöslich, stabil und ungiftig. Daher ist rotes Quecksilbersulfid für die dauerhafte Entsorgung geeignet.

Der Quench 104 wird mit im Kreislauf geführtern Kühlwasser gespeist, so dass es im Quench 104 zu einem schlagartigen Abkühlen des Quecksilbersulfides bis in den Bereich der Festphase von Quecksilbersulfid kommt. Vorzugsweise wird das Quecksilbersulfid auf eine Temperatur zwischen 25 °C und 50 °C abgekühlt. Anschließend wird das so erhaltene feste Quecksilbersulfid zusammen mit dem Kühlwasser einer Fest-Flüssig-Trennstufe zugeführt, wobei in einer Zentrifuge 6 das feste Quecksilbersulfid von dem flüssigen Kühlwasser abgetrennt wird. Das Kühlwasser wird anschließend zum Quench 104 zurückgeführt, wobei eine zwischengeschaltete Kühlung des Kühlwassers vorgesehen sein kann.

Im Anschluß an die Fest-Flüssig-Trennung wird das Quecksilbersulfid einer Filterpresse 107 zugeführt. Der so erzeugte Filterkuchen kann im Anschluß in einer nicht im Einzelnen dargestellten Trocknungseinrichtung getrocknet werden und wird dann in zur Endlagerung vorgesehene Lagergebinde 108 eingefüllt.

Im Übrigen ist eine Vakuumpumpe 109 vorgesehen, um dampfförmige Quecksilbersulfidanteile zu erfassen und einem Aktivkohlefilter 110 zuzuführen. Der den Aktivkohlefilter 110 passierende Gasstrom kann danach in die Umgebung abgeleitet werden.

Im Ergebnis wird durch die vorliegende Erfindung ein Verfahren und eine Vorrichtung zur Herstellung von Quecksilbersulfid zur finalen umweltgerechten Entsorgung zur Verfügung gestellt, das sich durch eine hohe Effizienz bei vollständiger Reaktion des Quecksilbers mit hoher Arbeits- und Emissionssicherheit bei gleichzeitig verhältnismäßig geringen technischen Aufwand auszeichnet.

### Bezugszeichenliste

- 1: Vorrichtung
- 2: Mischeinrichtung
- 3: Mischergehäuse
- 3a: Mischerwelle
- 3b: Mischerschaufel
- 4: Beschickungseinrichtung
- 5: Vorlagebehälter
- 6: Vorlagebehälter
- 7: Vorlagebehälter
- 8: Inertgaszuführung
- 9: Vakuumpumpeinrichtung
- 10: Filtereinrichtung
- 11: Heizeinrichtung
- 12: Behälter

- 101: Vorrichtung
- 102: Reaktor
- 103: Vorlagebehälter
- 104: Quench
- 105: Leitung
- 106: Zentrifuge
- 107: Filterpresse
- 108: Lagergebinde
- 109: Vakuumpumpe
- 110: Aktivkohlefilter

## Patentansprüche

1. Verfahren zur Herstellung von Quecksilbersulfid zur anschließenden Entsorgung, wobei sich das Quecksilbersulfid während eines Mischvorgangs in einer Mischeinrichtung (2) aus einer Mischung von elementarem Quecksilber mit einem Zugabematerial aus elementarem Schwefel oder einer Schwefelverbindung ergibt, **dadurch gekennzeichnet, dass** das Mischen in der Mischeinrichtung (2) bei Unterdruck durchgeführt wird.

2. Verfahren nach Anspruch 1, **dadurch gekennzeichnet, dass** das Mischen des Quecksilbers und des Zugabematerials während des Mischvorgangs bei einer Temperatur oberhalb des Schmelzpunktes des Zugabematerials erfolgt.

3. Verfahren nach Anspruch 1 oder 2, **dadurch gekennzeichnet, dass** das Mischen bei einer Temperatur über 150°C und insbesondere im Bereich des Siedepunktes von Quecksilber erfolgt.

4. Verfahren nach einem der vorhergehenden Ansprüche, **dadurch gekennzeichnet, dass** das Zugabematerial und das Quecksilber in einem stöchiometrischen oder einem geringfügig überstöchiometrischen Verhältnis, vorzugsweise in einem stöchiometrischen Verhältnis zwischen 0,16:1 bis 0,5:1, insbesondere zwischen 0,18:1 bis 0,32:1 und besonders bevorzugt zwischen 0,19:1 und 0,23:1 zugeführt werden.

5. Verfahren nach einem der vorhergehenden Ansprüche, **dadurch gekennzeichnet, dass** die Mischeinrichtung (2) zur Erzielung einer sauerstofffreien Atmosphäre mit Inertgas gespült wird.

6. Verfahren nach einem der vorhergehenden Ansprüche, **dadurch gekennzeichnet, dass** der Mischvorgang in einem geschlossenen, gasdichten Raum der Mischeinrichtung (2) durchgeführt wird.

7. Verfahren nach einem der vorhergehenden Ansprüche, **dadurch gekennzeichnet, dass** der Mischvorgang über eine Behandlungszeit zwischen 10 Minuten und drei Stunden, insbesondere 20 Minuten bis zwei Stunden und insbesondere zwischen 30 Minuten und einer Stunde durchgeführt wird.

8. Verfahren nach einem der vorhergehenden Ansprüche, **dadurch gekennzeichnet, dass** der Mischeinrichtung (2) eine Charge pro Mischvorgang zwischen 10 und 10.000 Liter zugeführt wird.

9. Verfahren nach einem der vorhergehenden Ansprüche, **dadurch gekennzeichnet, dass** der Mischeinrichtung wenigstens ein Zuschlagstoff zur Konditionierung des Quecksilbersulfids, insbesondere zur Herstellung von Quecksilbersulfid in körniger Form zugeführt wird.

10. Verfahren nach einem der vorhergehenden Ansprüche, **dadurch gekennzeichnet, dass** das Quecksilbersulfid nach dem Mischen über eine mit der Mischeinrichtung (2) gekoppelte, geschlossene Abführeinrichtung abgeführt wird.

## Claims

1. A process for producing mercury sulfide for subsequent disposal, wherein the mercury sulfide results from a mixture of elemental mercury with an additive material of elemental sulfur or a sulfur compound during a mixing process in a mixing means (2), **characterized in that** the mixing in the mixing means (2) is performed at a negative pressure.

2. The process according to claim 1, **characterized in that** the mixing of the mercury and the additive material during the mixing process is performed at a temperature above the melting point of the additive material.

3. The process according to claim 1 or 2, **characterized in that** the mixing is performed at a temperature above 150°C and in particular in the range of the boiling point of mercury.

4. The process according to any one of the preceding claims, **characterized in that** the additive material and the mercury are supplied in a stoichiometric or in a slightly superstoichiometric ratio, preferably in a stoichiometric ratio between 0.16:1 to 0,5:1, in particular between 0.18:1 to 0,32:1 and particularly preferred between 0,19:1 and 0.23:1.

5. The process according to any one of the preceding claims, **characterized in that** the mixing means (2) is flushed with inert gas to achieve an oxygen-free atmosphere.

6. The process according to any one of the preceding claims, **characterized in that** the mixing process is performed in a closed, gas-tight space of the mixing means (2).

7. The process according to any one of the preceding claims, **characterized in that** the mixing process is performed for a treatment time between 10 minutes and three hours, in particular 20 minutes to two hours and in particular between 30 minutes and one hour.

8. The process according to any one of the preceding claims, **characterized in that** the mixing means (2) is supplied with a batch per mixing process between 10 and 10,000 liters.

9. The process according to any one of the preceding claims, **characterized in that** the mixing means (2) is supplied with at least one loading material for conditioning of the mercury sulfide, in particular for producing mercury sulfide in a grainy form.

10. The process according to any one of the preceding claims, **characterized in that** the mercury sulfide, after mixing, is discharged via a closed discharge means coupled to the mixing means (2).

## Revendications

1. Procédé pour réaliser du sulfure de mercure en vue du recyclage ultérieur, le sulfure de mercure étant obtenu pendant un processus de mélange dans un mélangeur (2) à partir d'un mélange de mercure élémentaire avec un additif formé de soufre élémentaire ou d'un composé de soufre, **caractérisé en ce que** le mélange est mis en oeuvre en présence d'une dépression dans le mélangeur (2).

2. Procédé selon la revendication 1, **caractérisé en ce que** le mélange du mercure et de l'additif est effectué pendant le processus de mélange avec une température supérieure au point de fusion de l'additif.

3. Procédé selon la revendication 1 ou 2, **caractérisé en ce que** le mélange est effectué à une température supérieure à 150°C et en particulier dans la plage du point d'ébullition du mercure.

4. Procédé selon l'une quelconque des revendications précédentes, **caractérisé en ce que** l'additif et le mercure sont acheminés dans un rapport stoechiométrique ou un rapport légèrement sur-stoechiométrique, de préférence dans un rapport stoechiométrique entre 0,16:1 à 0,5:1, en particulier entre 0,18:1 à 0,32:1 et encore mieux entre 0,19:1 à 0,23:1.

5. Procédé selon l'une quelconque des revendications précédentes, **caractérisé en ce que** le mélangeur (2) est lavé avec un gaz inerte pour obtenir une atmosphère exempte d'oxygène.

6. Procédé selon l'une quelconque des revendications précédentes, **caractérisé en ce que** le processus de mélange est mis en oeuvre dans le mélangeur (2) dans un espace fermé, étanche aux gaz.

7. Procédé selon l'une quelconque des revendications précédentes, **caractérisé en ce que** le processus de mélange est mis en oeuvre pendant une durée de traitement entre 10 minutes et trois heures, en particulier 20 minutes à deux heures et en particulier entre 30 minutes et une heure.

8. Procédé selon l'une quelconque des revendications précédentes, **caractérisé en ce qu'**une charge entre 10 et 10 000 litres par processus de mélange est acheminée vers le mélangeur (2).

9. Procédé selon l'une quelconque des revendications précédentes, **caractérisé en ce qu'**au moins un granulat pour le conditionnement du sulfure de mercure, en particulier pour la réalisation du sulfure de mercure en forme de granules, est acheminé vers le mélangeur.

10. Procédé selon l'une quelconque des revendications précédentes, **caractérisé en ce que** le sulfure de mercure, après le mélange, est évacué par l'intermédiaire d'un dispositif d'évacuation fermé, couplé au mélangeur (2).
